# EUROPEAN PATENT APPLICATION

(11) **EP 4 393 631 A1**
(43) Date of publication of application: **03.07.2024**
(21) Application number: 22860588.7
(22) Date of filing: 25.08.2022
(51) Int. Cl.: B23K 26/21, B23K 26/60, B23K 26/348, B23K 9/23, B23K 9/173

(54) **FABRICATION METHOD FOR STEEL THIN-WALLED TAILOR-WELDED PART AND HOT-STAMPED PART PREPARED USING TAILORED-WELDED PART**

(30) Priority: 25.08.2021 CN 202110980317
(71) Applicant: BAOSHAN IRON & STEEL CO., LTD., Shanghai 201900 (CN)
(72) Inventor: PAN, Hua, Shanghai 201900 (CN); LIU, Chengjie, Shanghai 201900 (CN); WU, Tianhai, Shanghai 201900 (CN); LEI, Ming, Shanghai 201900 (CN); SUN, Zhongqu, Shanghai 201900 (CN); JIANG, Haomin, Shanghai 201900 (CN); WANG, Shuyang, Shanghai 201900 (CN); WU, Yue, Shanghai 201900 (CN)
(74) Representative: Kuhnen & Wacker Patent- und Rechtsanwaltsbüro PartG mbB
(86) International application number: PCT/CN2022/114784
(87) International publication number: WO 2023/025242

(57) **Abstract**

A fabrication method for a steel thin-walled tailor-welded part and a hot-stamped part prepared by using the tailored welded part, the method comprising: using steel plates (10, 10, 20) to be welded which have an aluminum or aluminum alloy coating (12, 12', 22, 22') is used; by means of adjusting the composition of a shielding gas (50) and the composition of a welding wire (30) during a welding process, in combination with the control of the welding speed and wire-feeding speed, controlling the content of free aluminum in a weld seam to be 0.1 to 4.0 wt.%, which prevents the production of iron-aluminum intermetallic compounds in the weld seam during a tailor welding process while ensuring that an appropriate amount of ferrite which is distributed in a dispersed manner is produced in the weld seam. The weld seam structure of the obtained tailor-welded part is +1 to 15 vol.% martensite, +0 to 5 vol.% ferrite which is distributed in a dispersed manner, and the remainder is austenite. The weld seam structure of the hot-stamped part obtained via hot stamping is +0.1 to 10 vol.% martensite, and ferrite which is distributed in a dispersed manner.

## Description

### Technical Field

The present disclosure relates to a method for manufacturing welded parts, and in particular to a method for manufacturing steel thin-walled tailor-welded part and hot-stamped part prepared using tailor-welded part.

### Background Art

Lightweight and high-strength automotive steel plates have become a target pursued by the automotive industry in recent years. In addition, the energy-saving and emission-reducing policy is strongly implemented across the nation. As a result, there is an increasing demand for high-strength thinned automotive plates in the automotive industry. Compared with the cold stamping technology, the hot stamping technology has the advantages of obvious weight reduction, good formability, and high dimensional precision, and thus plays an important role in imparting high strength to automotive steel plates. As consumers' requirements for safety, reliability and comfort of automobiles increase, many automotive enterprises seek to enhance product quality by improving design of automobile structures and utilizing novel manufacturing processes. Tailor welded parts are obtained by welding two or more steel plates having same/different materials, same/different thicknesses or same/different coatings to meet different requirements of components for material properties. The laser tailor-welded part hot stamping process can reduce vehicle body weight, improve assembly accuracy and simplify assembly process. At the same time, it can also take the advantages of hot stamping to further improve the formability of steel plates.

Hot stamped products produced by laser tailor welding are characterized by high strength, complex shape, good formability, high dimensional precision, and small rebound resilience. Steel plates for hot stamping may be classified into bare steel plates and plated steel plates according to surface state. In a practical hot stamping process, the surface of bare steel is prone to oxidation at high temperatures to form oxide scale. In the course of stamping, the oxide scale is pressed into the steel to form surface defects which greatly affect its performance in use. Compared with bare plates, hot-stamped plated steel plates avoid oxidation of the steel plates, and need no shot blasting after the hot stamping. Therefore, the hot-stamped plated steel plates have attracted more and more attention. At present, hot-stamped steel with an aluminum or aluminum alloy clad layer is commonly used. However, brittle and rigid intermetallic compounds (Fe₃Al, Fe₂Al₅, FeAl₃) and ferrite are formed since the clad layer melts into a molten pool in the process of welding the steel. As a result, the strength and ductility of the welded joint decrease, and the steel cannot be used.

The Chinese Patent Publication No. CN101426612A discloses "a method for manufacturing welded parts with good mechanical properties from rolled coated plates", which uses a steel plate containing aluminum-silicon clad layer as a raw material to manufacture a welded blank containing only intermetallic compounds as a precoat. This method solves the problem that the weld strength and elongation are not up to standard due to the aluminum melting into the molten pool, but the clad layer needs to be ablated before welding the steel plate, which increases equipment investment and reduces production efficiency.

The Chinese Patent Publication No. CN102985216A discloses "a method for arc/laser hybrid welding aluminum-coated steel parts with nitrogen and/or oxygen-containing gas", in which arc + laser hybrid welding is used in the process of welding aluminum-coated parts, the shielding gas is added with additional gas nitrogen or oxygen, and the volume content of the additional gas is 1~20%, with the function of the additional gas is to capture aluminum to form Al₂O₃ or AlN compounds to avoid the formation of ferrite or other harmful intermetallic compounds. The formed alumina or aluminum nitride floats on the surface of the weld pool, thus preventing aluminum from dissolving in the weld pool (paragraph 0015) and the welding line structure is fully martensitic. According to this publication, it can be seen that when the steel plate with aluminum or aluminum alloy clad layer is directly tailor welded, the strength of the welded joint becomes worse after hot stamping due to the intrusion of the clad layer into the molten pool during welding, and the ductility of the joint is about 1%, resulting in the weld fracture of the tailored hot stamped parts when the vehicle collides, and it cannot play its due role in safety protection.

The Chinese Patent Publication CN108025400A discloses "a laser welding method for the production of semi-finished plates from quenchable steel with aluminum-based or aluminum-silicon-based clad layer", in which differential strength hot stamped steel plates are tailor-welded and the resulting welding line structure is a fully martensitic structure.

The Chinese Patent Publication CN201380027064.4 discloses "metal plate parts with welded notches and a forming method thereof". The method uses a steel plate having an aluminum-silicon clad layer as the raw material, which is subjected to welding after the aluminum-silicon clad layer is fully removed. The method can also solve the problem that the welding line strength and elongation are not up to standard because the aluminum is melted into the molten pool. But the removal depth control of the clad layer is difficult, because if the clad layer is not completely removed, it will be similar to the method disclosed in the Chinese patent publication CN101426612A; if the removal depth of the clad layer is too large, the steel substrate will be damaged, which is equivalent to disguised thinning of the material, and the joint performance after welding will be reduced. In addition, the removal width control of the clad layer is also a problem. If the removal width is narrower than the welding line, the clad layer elements will be melted into the molten pool during welding, which will reduce the welding line performance; if the removal width is wider than the welding line, the heat-affected zone in welding will not be protected by the clad layer, affecting corrosion resistance of the joint.

The Chinese Patent Publication CN104023899A discloses "a tailor welded part and the manufacturing method thereof, as well as a hot-stamped part using the tailor welded part", which uses welding wires with higher carbon and manganese content than the base metal for the welding of steel plates having an aluminum or aluminum alloy clad layer. Although the problem of welding line performance is solved, the welding line structure is all transformed into martensite during hot stamping of the welding line, and the carbon and manganese content in the welding wire are 0. 1~0.8wt.% and 1.5~7.0wt.% higher than that of the base metal, respectively. It is known that the content of carbon, manganese and other elements in hot-stamped steel itself is very high, so the welding wire disclosed in this patent publication is a high-carbon and high-manganese welding wire with high manufacturing difficulty.

The Chinese Patent Publication CN111230301A discloses "a method for manufacturing an equal-strength steel thin-wall welded component with an aluminum or aluminum alloy clad layer", which uses a welding wire with lower carbon and manganese content than the base metal for the welding of 1500MPa grade steel plate having an aluminum or aluminum alloy clad layer. However, the welded joint obtained by this method can only reach 1500MPa level. If a hot-stamped part of a higher strength level is obtained by using this method, the welded joint of hot-stamped part has a lower welding line strength under quasi-static tension than that of the base metal, resulting in welding line fracture. Thus, it cannot be used in an automotive factory.

### Summary

An object of the present disclosure is to provide a method for manufacturing steel thin-walled tailor-welded parts and a hot-stamped part prepared by using the tailor-welded parts. The present disclosure can solve a problem that the weld performance of the tailor-welded parts deteriorates after hot stamping because the clad layer is melted into the molten pool in the tailor welding process, to ensure that the quasi-static tensile fracture position of the welded joint of hot-stamped part obtained by using the tailor-welded parts is located in the base metal. The elongation of the joint is greater than 4%, and the welding line strength is greater than the tensile strength of low-strength base metal; when the strain rate of welded joint is 40~800/s, the tensile fracture strain value is greater than 0.08, so that the application requirements in the field of automobile production are better satisfied.

To achieve the above object, the technical solution of the present disclosure is as follows:
A method for manufacturing a steel thin-walled tailor-welded part, comprising the following steps:
1) preparation before steel plate welding
   taking two steel plates of the same or different strength levels to be welded and cleaning the surface of the steel plates to be welded before welding, wherein the steel plate to be welded comprises a substrate and an aluminum or aluminum alloy clad layer on at least one surface thereof, wherein the clad layer comprises an intermetallic compound alloy layer in contact with the substrate and a metal alloy layer thereon, wherein the clad layer on the steel plate to be welded is not removed or thinned;
2) presetting a butt gap in welding
   presetting a butt gap between steel plates to be welded at 0.1-0.5 mm;
3) welding process
   conducting welding by a laser filler wire welding, a Metal Active Gas Arc Welding (MAG welding) or a laser MAG hybrid welding;
   wherein, in the laser filler wire welding process, a welding speed is 40-120 mm/s, a wire feeding speed is 2-8 m/min;
   in the MAG welding, a welding speed is 300-800 mm/min;
   in the laser MAG hybrid welding, a welding speed is 40-150 mm/s, a wire feeding speed is 2-10 m/min;
   the shielding gas is Ar+15~80vol.%CO₂+1~10vol.%N₂, the shielding gas has a flow rate of from 10 to 25 L/min;
   the composition of a welding wire used in the welding comprises C, Mn, Ni austenite-stabilizing elements, and the difference obtained by subtracting the content of three elements in steel plate A to be welded from the content of corresponding elements in the composition of welding wire is expressed by ΔC, ΔMn, ΔNi respectively;
   the steel plate A to be welded is one of two steel plates to be welded of the same strength level, or the steel plate to be welded with lower strength level in two steel plates to be welded of different strength levels; wherein,
   the steel plate A to be welded has a tensile strength of <900MPa, ΔC:-0.05~0.09wt.%, ΔMn:-0.5wt.%-1.4wt.%, ΔNi: 0~4.0wt.%; or
   900MPa≤ the tensile strength of the steel plate A to be welded <1300MPa, ΔC: -0.1~0.09wt.%, ΔMn: -2~1.4wt.%, ΔNi: 0~4.0wt%; or
   1300MPa≤ the tensile strength of the steel plate A to be welded <1700MPa, ΔC: -0.21-0.05wt.%, ΔMn: -1.4-1.4wt.%, ΔNi: 1.76~4.0wt%; or
   the tensile strength of the steel plate A to be welded is ≥1700MPa, ΔC: -0.26~-0.15wt.%, ΔMn: -1.4~0.7wt.%, ΔNi: 2.26~4.0wt%;
   the tailored weld part has a welding line structure of martensite + 1~15vol.% diffusely distributed ferrite + 0~5vol.% residual austenite; and a free aluminum content in the welding line of 0.1~4.0wt.%.

Preferably, in step 3), the shielding gas has a CO₂ content of 15~50 vol.%.

Preferably, in step 3), the shielding gas has a N₂ content of 2~4 vol.%.

Preferably, in step 3), the MAG welding or laser MAG hybrid welding uses a welding current of 110~130A, a welding voltage of 18~25V. Preferably, in step 3), the MAG welding or laser MAG hybrid welding uses a welding current of 110~130A, a welding voltage of 18~25V.

Preferably, in step 3), in the laser MAG hybrid welding process, the welding speed is 60-150 mm/s and the wire feeding speed is 4-10 m/min.

Preferably, in step 3), in the laser filler wire welding process or laser MAG hybrid welding process, a defocus distance is from -10 to 10 mm, a laser power is controlled at from 3 to 8 kW. Preferably, the defocus distance is from -8 to 8 mm and the laser power is controlled at from 4 to 8 kW.

Preferably, in step 3), in the laser filler wire welding process or laser MAG hybrid welding process, the minimum spot that can be output by the laser processing head has a diameter of 0.3~1.6mm. In the present disclosure, the person skilled in the art can select relevant parameters according to the actual situation to ensure that the minimum spot output by the laser processing head has a diameter of 0.3~1.6mm. For example, a ratio of the focal length of focusing lens to the focal length of collimator lens is 0.75-4.0, a Rayleigh Length is 1.249-44.955, a diameter of laser transmission fiber is 0.2-0.8mm, and a focusing angle is 2.3~18.4Grad.

Preferably, in step 3), the welding adopts the laser filler wire welding process, wherein the welding speed is 40-120 mm/s, the wire feeding speed is 2-8 m/min, the defocus distance is from -8 to 8 mm and the laser power is controlled at from 4 to 8 kW.

Preferably, in step 3), the welding adopts the MAG welding, wherein the welding speed is 400~800mm/min, the welding current is 110~125A and the welding voltage is 18~25V.

Preferably, in step 3), the welding adopts the laser MAG hybrid welding, wherein the welding speed is 60-150 mm/s, the wire feeding speed is 4-10 m/min, the defocus distance is from -10 to 10 mm and the laser power is controlled at from 3 to 8 kW, the welding current is 110~130A and the welding voltage is 18~25V

Preferably, the welding wire used in the welding has a diameter of from 1.0 to 1.6 mm.

Preferably, the substrate has a thickness of 0.5~3mm.

Preferably, the clad layer is an aluminum alloy clad layer, wherein the aluminum alloy clad layer has a composition based on weight percentage of Si: 5~11%, Fe: 0~4%, with a balance of Al and other unavoidable impurities. In some embodiments, the aluminum alloy clad layer has a composition based on weight percentage of Si: 8.5-10.5%, Fe: 1.5-2.5%, with a balance of Al and other unavoidable impurities.

Preferably, the steel plate A to be welded has a tensile strength of <900MPa, and a composition based on weight percentage of C: 0.06-0.1%, 0<Si<0.1%, Mn: 0.5-1.0%, P<0.03%, S<0.01%, Al<0.1%, 0<Cr≤0.1%, 0<Ti≤0.05%, with a balance of Fe and other unavoidable impurities.

Preferably, the steel plate A to be welded has a tensile strength of more than or equal to 900 MPa and less than 1300 MPa, and a composition based on weight percentage of C: 0.06-0.15%, Si: 0.3-1.0%, Mn: 0.5-2.5%, P≤0.10%, S≤0.05%, Al: 0.02-0.30%, Cr: 0.05-0.5%, Nb: 0.02-0.20%, V≤0.15%, Ti: 0.01-0.10%, Mo≤0.5%, Ni≤0.5%, B: 0.001-0.01%, with a balance of Fe and other unavoidable impurities.

Preferably, the steel plate A to be welded has a tensile strength of more than or equal to 1300 MPa and less than 1700 MPa, and a composition based on weight percentage of C: 0.2-0.3%, Si: 0.1-0.5%, Mn: 0.5-2.5%, P<0.015%, S<0.05%, Al<0.1%, Ti<0.2%, B: 0.0005~0.08%, Cr: 0.01-1%, Ni≤0.24%, with a balance of Fe and other unavoidable impurities.

Preferably, the steel plate A to be welded has a tensile strength of ≥1700MPa, and a composition based on weight percentage of C: 0.30-0.39%, Si: 0.05-0.6%, Mn: 0.5-2.5%, P≤0.015%, S≤0.01%, Al: 0.01-0.07%, Cr≤1.0%, Nb≤0.08%, V≤0.1%, Ti: 0.01-0.12%, Mo: 0.01-0.5%, Ni<0.25%, B: 0.0001~0.005%, N≤0.006%, with a balance of Fe and other unavoidable impurities.

Preferably, the welding wire has a composition based on weight percentage of C: 0.05~0.15%, Mn: 0.5-1.9%, Ni: 0~4%, with a balance of Fe and other unavoidable impurities. In some embodiments, the content of Ni in the welding wire is 0.5~4%. It should be understood that the selection of the C, Mn and Ni content in the welding wire should meet the requirements described above.

The present disclosure comprises a steel thin-walled tailor-welded part obtained by the manufacturing method described above.

In some embodiments, the present disclosure provides a steel thin-walled tailor-welded part, which is formed by welding two steel plates to be welded of the same or different strength levels, wherein the steel plate to be welded comprises a substrate and an aluminum or aluminum alloy clad layer on at least one surface thereof, wherein the clad layer comprises an intermetallic compound alloy layer in contact with the substrate and a metal alloy layer thereon, wherein the steel thin-walled tailor-welded part has a welding line structure of martensite + 1~15vol.% diffusely distributed ferrite + 0~5vol.% residual austenite; and a free aluminum content in the welding line of 0.1~4.0wt.%.

Preferably, the substrate has a thickness of 0.5~3mm.

Preferably, the clad layer is an aluminum alloy clad layer, wherein the aluminum alloy clad layer has a composition based on weight percentage of Si: 5~11%, Fe: 0~4%, with a balance of Al and other unavoidable impurities. In some embodiments, the aluminum alloy clad layer has a composition based on weight percentage of Si: 8.5-10.5%, Fe: 1.5-2.5%, with a balance of Al and other unavoidable impurities.

Preferably, the two steel plates to be welded are independently selected from the following steel plates:
a steel plate having a tensile strength of <900MPa, which has a composition based on weight percentage of C: 0.06~0.1%, 0<Si<0.1%, Mn: 0.5-1.0%, P<0.03%, S<0.01%, Al<0.1%, 0< Cr≤0.1%, 0< Ti≤0.05%, and a balance of Fe and other unavoidable impurities;
a steel plate having a tensile strength of more than or equal to 900MPa and less than 1300MPa, which has a composition based on weight percentage of C: 0.06-0.15%, Si: 0.3-1.0%, Mn: 0.5-2.5%, P≤0.10%, S≤0.05%, Al: 0.02-0.30%, Cr: 0.05-0.5%, Nb: 0.02-0.20%, V≤0.15%, Ti: 0.01-0.10%, Mo≤0.5%, Ni≤0.5%, B: 0.001-0.01%, and a balance of Fe and other unavoidable impurities;
a steel plate having a tensile strength of more than or equal to 1300MPa and less than 1700MPa, which has a composition based on weight percentage of C: 0.2-0.3%, Si: 0.1-0.5%, Mn: 0.5-2.5%, P<0.015%, S<0.05%, Al<0.1%, Ti<0.2%, B: 0.0005~0.08%, Cr: 0.01-1%, Ni≤0.24%, and a balance of Fe and other unavoidable impurities; and
a steel plate having a tensile strength of ≥1700MPa, which has a composition based on weight percentage of C: 0.30-0.39%, Si: 0.05~0.6%, Mn: 0.5~2.5%, P≤0.015%, S≤0.01%, Al: 0.01-0.07%, Cr≤1.0%, Nb≤0.08%, V<0.1%, Ti: 0.01-0.12%, Mo: 0.01-0.5%, Ni<0.25%, B: 0.0001-0.005%, N≤0.006%, and a balance of Fe and other unavoidable impurities.

Preferably, the welding line structure of the steel thin-walled tailor-welded part is free of iron-aluminum intermetallic compounds and massive ferrite.

The present disclosure also provides a hot-stamped part prepared by using the steel thin-walled tailor-welded parts obtained by the manufacturing method described above. The hot-stamped part has a welding line structure of martensite + 0. 1~10vol.% diffusely distributed ferrite. The quasi-static tensile fracture position of the hot-stamped part is located in the base metal. The elongation of the joint is no less than 4%. When the strain rate of welded joint is 40~800/s, the tensile fracture strain value of welded joint is greater than 0.08.

Preferably, in the welding line structure of the hot stamped parts of the present disclosure, the content of ferrite is 0.5~5vol.%.

Preferably, the welding line structure of the hot stamped parts of the present disclosure has needle-like ferrite.

Preferably, when the strain rate of welded joint of the hot stamped parts of the present disclosure is 40~800/s, the tensile fracture strain value of welded joint is greater than 0.09.

Preferably, the welding line structure of the hot stamped parts of the present disclosure is free of iron-aluminum intermetallic compounds and massive ferrite.

The present disclosure also provides a hot-stamped part, which has a welding line structure of martensite + 0.1~10vol.% diffusely distributed ferrite, a quasi-static tensile fracture position of the hot-stamped part located in the base metal, a joint elongation of no less than 4%, and a welded joint tensile fracture strain value of greater than 0.08 when the strain rate of welded joint is 40-800/s.

Preferably, the hot stamped part is prepared by using the steel thin-walled tailor-welded part according to the present disclosure, or using the steel thin-walled tailor-welded part obtained by the manufacturing method of the present disclosure.

Preferably, the welding line structure of the hot stamped part according to the present disclosure has a content of ferrite of 0.5~5vol.%.

Preferably, the welding line structure of the hot stamped part according to the present disclosure has needle-like ferrite.

Preferably, when the welded joint strain rate of the hot stamped part according to the present disclosure is 40~800/s, the tensile fracture strain value of the welded joint is greater than 0.09.

Preferably, the welding line structure of the hot stamped part according to the present disclosure is free of iron-aluminum intermetallic compounds and massive ferrite.

The present disclosure also provides a method for manufacturing a hot stamped part, which comprises a step of subjecting the steel thin-walled tailor-welded part according to the present disclosure to hot stamping and quenching.

In some embodiments, the tailor welded blank was subjected to hot stamping and quenching after the welding, wherein the heating temperature is 920-950 °C, the heating time is 3-6 minutes, and the pressure of the blank is maintained in a water-passing mold for 8-20 seconds.

Preferably, the method comprises a step of manufacturing the steel thin-walled tailor-welded part by adopting the method for manufacturing a steel thin-walled tailor-welded part as described in any embodiment described herein, and a step of subjecting the manufactured steel thin-walled tailored-welded part to hot stamping and quenching.

Preferably, the hot stamped part has a welding line structure of martensite + 0.1~10vol.% diffusely distributed ferrite, a quasi-static tensile fracture position of the welded joint of the hot-stamped part located in the base metal, a joint elongation of no less than 4%, and a welded joint tensile fracture strain value of greater than 0.08 when the strain rate of the welded joint is 40-800/s.

Preferably, the welding line structure of the hot stamped part has a content of ferrite of 0.5~5vol.%.

Preferably, the welding line structure of the hot stamped part has needle-like ferrite.

Preferably, the welding line structure of the hot stamped part is free of iron-aluminum intermetallic compounds and massive ferrite.

Preferably, when the welded joint strain rate of the hot stamped part is 40~800/s, the tensile fracture strain value of the welded j oint is greater than 0.09.

In the present disclosure, there is a clad layer on at least one surface of the substrate selected for the steel plate to be welded. The clad layer in the to-be-welded zone of the steel plate to be welded is not removed or thinned before the welding or during the welding. Due to the presence of aluminum-containing clad layer, brittle and rigid intermetallic compounds (Fe₃Al, Fe₂Al₅, FeAl₃) and excessive ferrite are formed since the clad layer melts into a molten pool. As a result, the strength and ductility of the welded joint after hot stamping decrease, and the steel cannot be used. In order to improve the weld performance of tailor-welded parts after hot stamping, the amount of free aluminum in the welding line should be controlled during the welding process, so as to avoid the formation of iron-aluminum intermetallic compounds in the welding line and form an appropriate amount of ferrite.

The welding process uses a ternary shielding gas of mixed argon, carbon dioxide and nitrogen, with the N₂ content of 1~10% by volume, and N₂ can transition nitrogen elements into the welding line. On the one hand, Al reacts with N in the molten pool, and the AIN formed is dispersed and distributed in the molten pool with the vigorous stirring of the molten pool, and will be used as a secondary phase particle to improve the strength of the welding line after hot stamping. On the other hand, the free Al in the molten pool is combined with N to form AlN, which controls the concentration of free Al in the molten pool, prevents the precipitation of excess ferrite, and also avoids the absence of ferrite in the welding line at room temperature. However, the proportion of N₂ in the shielding gas should not be too high, otherwise the ductility of the welded joint will be reduced, and nitrogen pores will also be triggered. The volume content of CO₂ is 15~80% and CO₂ enhances the activity of the shielding gas in the welding zone, which is conducive to increasing the penetration rate of the plate and the fluidity of liquid metal, improving the composition uniformity of molten metal, avoiding the segregation of aluminum, ensuring the composition uniformity of welding line, avoiding the strip structure due to the uneven composition, especially avoiding the large massive ferrite formed by the aggregation of aluminum, ensuring that the ferrite is diffusely distributed in the welding line, so that the performance of the welding line is stable.

In addition, the welding wire used in the welding process contains elements such as carbon, manganese, and nickel that enlarge the austenitic phase zone. The difference between the element content of carbon, manganese and nickel in the welding line and that in the steel plate to be welded is controlled. On the one hand, these three elements are the elements that expand the austenitic phase zone, compress the high-temperature ferrite region, prevent the welding line from precipitating excess ferrite before the hot stamping die is closed, and improve the welding line strength. On the other hand, it can reduce the martensitic transition temperature of the welding line and ensure the conversion rate of martensite.

Carbon is an important forming element of a welding wire, which affects the processability of the welding wire and the carbon equivalent of the welding line. When the carbon content is too low, the austenite stability of the welding line decreases, and it is difficult to ensure the strength of the welding line. When the carbon content is too high, the manufacturability of the welding wire decreases, and the plasticity and toughness of the welding line decrease. Preferably, the content of C in the welding wire can be 0.05~0.15%.

Manganese, as a maj or forming element of a welding wire, can improve the austenitic stability of the welding line, shift the C-curve to the right, and thus reduce the critical cooling rate of martensite. If the manganese content is too high, it will affect the manufacturability of the welding wire, and the plasticity and toughness of the welding line will decrease. If the Mn content is too low, the hardenability of the welding line is reduced, and the strengthening effect is weakened. Preferably, the content of Mn in the welding wire can be 0.5~1.9%.

Nickel, as another major forming element of a welding wire, can increase the stability of austenite in the welding line, reduce the critical Ms point temperature, and improve the hardenability, strength and toughness of the welding line. If the nickel content is too high, the production cost of the welding wire will increase, and the residual austenite will increase after the welding line is hot stamped, which will affect the strength of the welding line. The nickel content of the welding wire can be adjusted according to the strength level of the plate to be welded, ensuring the strength and toughness requirement of the welding line. Preferably, the Ni content in the welding wire can be 0~4%, such as 0.5~4%.

The composition of the welding wire for welding in the present disclosure varies based on the composition of the steel plate to be welded of low strength steel grade. With respect to the steel plate to be welded of different strength levels, the composition of the welding wire can vary accordingly, and the corresponding welding line composition also necessarily varies. Even if the structure of the welding line is the same after welding or hot stamping, the mechanical properties of the welding line are different, so as to meet the performance requirements of the automobile industry for different strength tailor-welded plates.

In the present disclosure, on the basis of controlling the composition of the shielding gas and the welding wire, the welding speed and the wire feeding speed are further controlled, and the proportion of the deposited metal (the welding line metal formed after the welding wire is melted) in the welding line is changed. Although the steel plate to be welded contains the aluminum or aluminum alloy clad layer, the concentration of aluminum element melted into the welding line of the tailor-welded part can be controlled. Through the combined action of the shielding gas, the composition of welding wire and the welding process, the concentration of free aluminum in the welding line of tailor-welded part is controlled at 0.1~4.0wt.%.

It is well known that Al is a promoting element for ferrite formation, and the ability of ferrite formation will be weakened if the free Al in the welding line is reduced. Thus, the content of free Al in the welding line is controlled at 0.1~4.0wt.%. On the one hand, it avoids the excessive ferrite generation in the welding line and ensures the strength of the welding line. On the other hand, the formation of iron-aluminum intermetallic compounds in the welding line can be avoided, and an appropriate amount of ferrite can be retained in the welding line, so as to ensure that the welding line structure of the tailor-welded part at room temperature is martensite + 1~15vol.% diffusely distributed ferrite + 0~5vol.% residual austenite.

In the production process of tailor-welded parts of the present disclosure, it is important to regulate the welding line structure of tailor-welded parts, mainly including regulating the number and morphology of ferrites, and avoiding the generation of iron-aluminum intermetallic compounds and massive ferrite in the welding process. The final tailor-welded part has a welding line structure of martensite + 1~15vol.% diffusely distributed ferrite + 0~5vol.% residual austenite. The hot-stamped part is obtained by subjecting the tailor welded part to a hot stamping forming process, so that an appropriate amount of diffusely distributed ferrite is retained in the welding line of hot-stamped parts. The final hot-stamped part has a welding line structure of martensite + 0.1~10vol.% diffusely distributed ferrite.

The hot-stamped part according to the present disclosure has a welding line structure of martensite + 0.1~10vol.% diffusely distributed ferrite, which improves the high-speed tensile performance of the welded joint. The welded joint fracture strain value is greater than 0.08 when the strain rate is 40~800/s. In contrast, the traditional hot stamped part has a welding line of a single martensite, and the welded joint fracture strain value is about 0.07 when the strain rate is 40/s. When the strain rate is 800/s, the welded joint fracture strain value is about 0.058, so it can be known that the high-speed tensile fracture strain value of the hot-stamped part according to the present disclosure is significantly improved. This is because martensite has mechanical characteristics of high strength, high hardness, and poor deformation ability, and ferrite has mechanical characteristics of good plasticity and toughness and strong deformation ability. Compared with welded joints having a welding line structure of single martensite, welded joints having a welding line structure of martensite + diffusely distributed needle ferrite can provide more coordinated deformation opportunities for martensite when subjected to external forces. In addition, the substructure of martensite is mainly dislocation, and the presence of ferrite will greatly reduce the dislocation density of martensite in welding line structure compared with that of the welding line structure of single martensite. The dislocation accumulation is easy to form microcracks, so the risk of microcracks in welded joints having a welding structure of martensite + diffusely distributed needle ferrite will be greatly reduced compared with those having a welding structure of single martensite. Even if microcracks are formed, the diffusely distributed ferrite also hinders the further growth and propagation of microcracks, so that the welded joints having the welding structure of martensite + diffusely distributed needle ferrite show better deformation ability than welded joints having the welding structure of single martensite, especially in the high-speed tensile process.

This indicates that the tailor-welded part obtained by the technical solution of the present disclosure has a welding line with stronger deformation ability when the hot-stamped part prepared by hot stamping collides and can absorb more energy, resulting in higher collision safety of the part. However, the ferrite content in the welding line of the hot-stamped part should not be too high, otherwise the strength and toughness of the welding line will be reduced.

The hot formed steel plate is tailor welded, and the strength of the welding line after hot stamping is enhanced through the mutual cooperation and mutual support of the welding wire composition, welding process and shielding gas, so as to ensure that the quasi-static tensile fracture position of the welded joint of the hot stamped parts obtained by hot stamping of tailor- welded part is located in the base metal, and the welding line strength is greater than the strength of the base metal of low-strength steel in the joint. It has good high-speed tensile performance and can meet the requirements of the automobile production.

The beneficial effects of the present disclosure are as follows:
The present disclosure adopts a hot-stamped steel plate with an aluminum or aluminum alloy clad layer for tailor-welding. By adjusting the composition of the welding wire, controlling the welding speed and the wire feeding speed, using a ternary shielding gas, and reducing the amount of free aluminum in the welding line of tailor-welded part, with the free aluminum content in the welding line controlled at 0.1~4.0wt.%, on the one hand, excessive ferrite generated in the welding line is avoided, which ensures the strength and toughness of the welding line; on the other hand, the formation of iron-aluminum intermetallic compounds in the welding line can be avoided, an appropriate amount of ferrite can be retained in the welding line, and CO₂ in the shielding gas can avoid the segregation of aluminum, which ensures the uniformity of the welding line composition, and avoids the formation of large massive ferrite due to aluminum aggregation, so that the welding line performance is more stable. With respect to the hot-stamped part prepared by subjection the obtained tailor-welded part to hot stamping, due to the presence of AlN in the welding line, the strength of the welding line is further improved, and the quasi-static tensile fracture position of the welded joint is located in the base metal, indicating that the welding line strength is greater than the strength of the base metal, which meets the requirements of automobile production.

The present disclosure ensures that the welding line structure of tailor welded part is martensite + 1~15vol.% diffusely distributed ferrite + 0~5vol.% residual austenite through the mutual cooperation and mutual support of welding wire composition, welding process, shielding gas composition and the contents thereof, so that martensite + 0.1~10vol.% diffusely distributed ferrite is formed in the welding line structure of the hot-stamped parts obtained by subjecting the tailor-welded parts to hot stamping. Compared with the hot-stamped parts having a welding line structure of full martensite, the high-speed tensile performances of the welded joint of the hot-stamped part according to the present disclosure are significantly improved, and the fracture strain value of the welded joint is greater than 0.08 when the strain rate is 40~800/s. In contrast, the traditional hot-stamped parts have a welding structure of single martensite, and the fracture strain value of the welded joint is about 0.07 when the strain rate is 40/s and the fracture strain value of the welded joint is about 0.058 when the strain rate is 800/s. That is, the hot-stamped parts prepared by tailor welded parts obtained by the technical solution of the present disclosure have better high-speed deformation ability under the premise of ensuring quasi-static mechanical properties, and can absorb more energy during collision and thus have higher collision safety.

### Description of the Drawings

Fig. 1 is a schematic diagram of laser wire filler tailored welding in Example 1 according to the present disclosure;
Fig. 2 is a schematic diagram of quasi-static tensile performance curve of the welded joints of hot stamped parts obtained in Example 1 of the present disclosure;
Fig. 3 is a schematic diagram of quasi-static tensile fracture position of the welded joints of hot stamped parts obtained in Example 1 of the present disclosure;
Fig. 4 is a metallographic diagram of the welded joints of hot stamped parts obtained in Example 1 of the present disclosure;
Fig. 5 is a hardness profile of the welded joints of hot-stamped parts obtained in Example 1 of the present disclosure.

### Detailed Description

The present disclosure will be further described below with reference to specific examples and figures. The present disclosure is not limited to the following embodiments, and any person can derive various other forms of products under the inspiration of the present disclosure, but regardless of any change in its shape or structure, all technical solutions which are the same or similar to the present disclosure fall within the protection scope of the present disclosure.

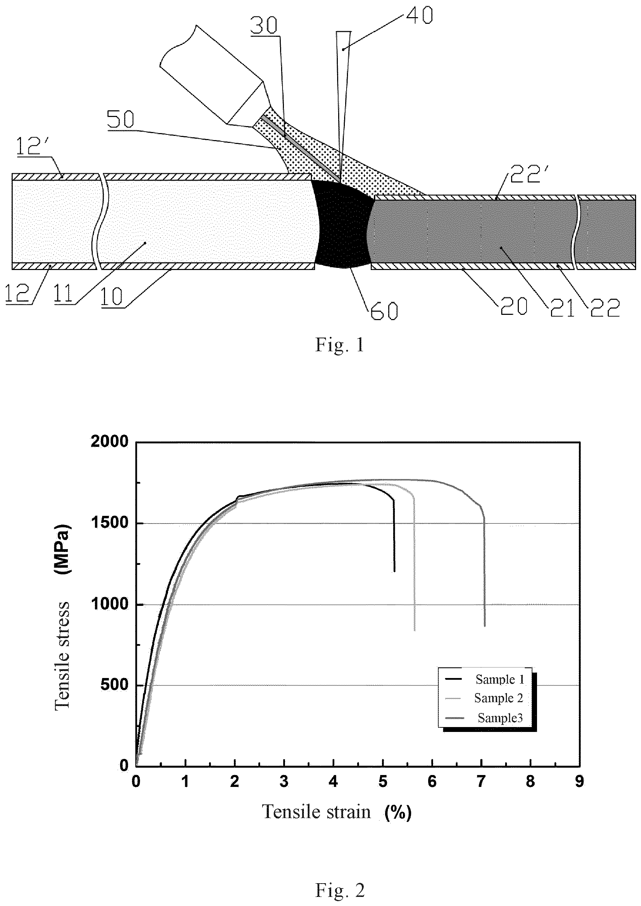

Referring to Fig. 1, in a laser filler wire tailored welding of the present disclosure, under the protection of a shielding gas 50, a welding wire 30, a steel plate 10 to be welded and a steel plate 20 to be welded are melted with a laser beam 40 to realize tailored welding. The steel plate 10 to be welded comprises a steel substrate 11 and clad layers 12, 12' on the substrate, and the steel plate 20 to be welded comprises a steel substrate 21 and clad layers 22, 22' on the substrate, wherein the clad layer is an aluminum or aluminum alloy clad layer.

Table 1 shows the composition of the steel plate 10 to be welded. Table 2 shows the composition of the steel plate 20 to be welded. Table 3 shows the composition of the welding wire of the present disclosure. Table 4 shows the quasi-static tensile properties of the welded joint of the hot-stamped part, and Table 5 shows the high-speed tensile performance of the welded joint of the hot-stamped part.

The method for manufacturing the steel thin-walled tailor-welded part according to the present disclosure comprising the following steps:
1) preparation before steel plate welding
   taking two steel plates of the same or different strength levels to be welded and cleaning the surface of the steel plates to be welded before welding;
2) presetting a butt gap in welding
   presetting a butt gap between steel plates to be welded at 0.1-0.5 mm;
3) welding process
   subjecting the two steel plates to be welded to the welding by a laser filler wire welding, a MAG welding or a laser MAG hybrid welding.

The weight percentages of Si and Fe in the aluminum alloy clad layer of the steel plate to be welded involved in Examples 1-21 and Comparative Examples 1-2 are shown in Table 1 and Table 2, and the balance is Al and other unavoidable impurities.

The strength grades 500MPa, 1000MPa, 1500MPa and 1800MPa that are involved in Examples 1-21 and Comparative Examples 1-2 refer to the tensile strength level after hot stamping of the steel plate to be welded. The 4 strength levels correspond to the ranges of tensile strength (tested according to ISO 6892 standard): 400~750MPa for 500MPa grade, 1000~1300MPa for 1000MPa grade, 1300~1700MPa for 1500MPa grade, and 1700~2150MPa for 1800MPa grade.

### Example 1

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1800 MPa, thickness t=1.8mm, the composition of the steel plate shown in Table 1) and the hot stamped steel plate 20 to be welded having an aluminum alloy clad layer (strength grade of 1800 MPa, thickness t=1.4mm, the composition of the steel plate shown in Table 2) were subj ected to laser filler wire tailor welding using the following process: a welding wire as described in the present disclosure (see Table 3 for the composition of the welding wire), a preset butt gap of 0.3 mm, a welding power of 4 kW, a welding speed of 80 mm/s, a defocus distance of 10 mm, a wire feeding speed of 4 m/min, a welding wire diameter of 1.2mm, a shielding gas of 48vol.%Ar +50vol.% CO₂ +2vol.%N₂, and a gas flow of 15 L/min were used.

After the welding, metallographic examination was conducted on the cross-section of the welding line. The macromorphology of the welding line was excellent, and there was no obvious spatter.

After the welding, the tailor welded blank was subjected to hot stamping and quenching, wherein the heating temperature was 945 °C, the heating time was 4 minutes, and the pressure of the blank was maintained in a water-passing mold for 10 seconds.

After the above-mentioned thermal cycle, the tailor welded blank was first completely austenitized. During the heating, atoms diffused between the clad layer and the steel, so that the original clad layer completely transformed into an intermetallic compound layer having a thickness larger than the thickness of the original clad layer. In addition, this layer had the characteristics of high melting point and high hardness, which prevented oxidation and decarburization of the substrate during the heating stage and the pressurizing stage. During the pressurizing stage in the mold, martensitic transformation occurred in the tailor welded blank.

The quasi-static tensile curve of the welding j oint is shown in Fig. 2. As can be seen from Fig. 2, the elongation of the hot-stamped part is greater than 4%, and the joint strength meets the requirements of the automotive factory.

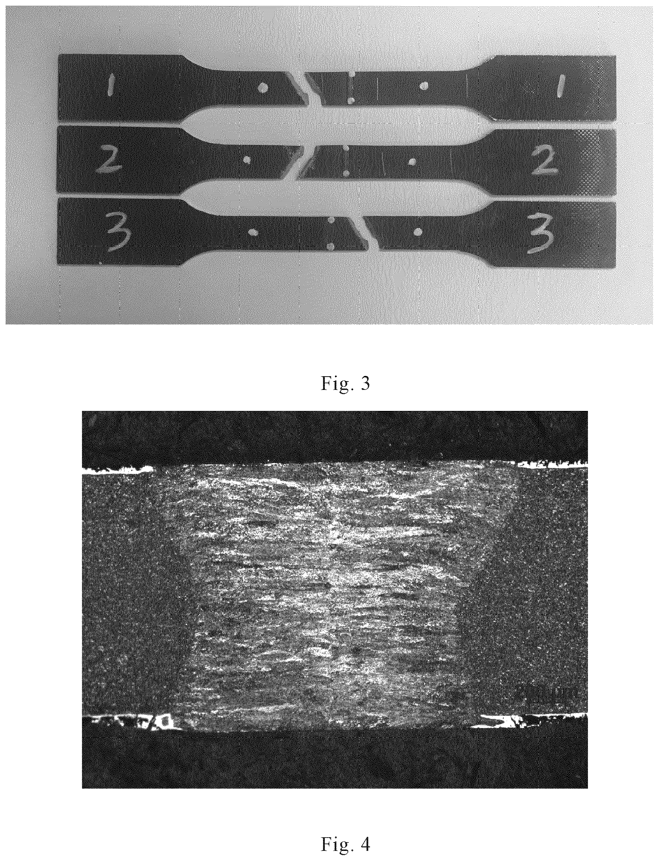

The fracture position of the joint is shown in Fig. 3. As can be seen from Fig. 3, when the welded joint of the hot-stamped part is quasi-statically stretched, the fracture position is located in the base metal.

The metallographic image of the joint is shown in Fig. 4. The welding line structure is martensite + 4.9vol.% diffusely distributed needle-like ferrite. No iron-aluminum intermetallic compounds or massive ferrites were observed.

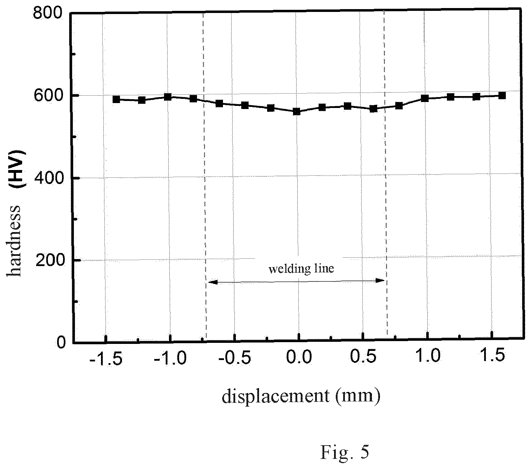

The hardness of the joint is shown in Fig. 5. As can be seen from Fig. 5, the hardness of the welding line of the hot-stamped part is consistent with that of the base metal. The quasi-static tensile performances of welded joints of the hot-stamped part are shown in Table 4. The high-speed tensile performances of welded joints of the hot-stamped part are shown in Table 5.

### Example 2

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1800 MPa, thickness t=1.4mm, the composition of the steel plate shown in Table 1) and the hot stamped steel plate 20 to be welded having an aluminum alloy clad layer (strength grade of 1800 MPa, thickness t=1.2mm, the composition of the steel plate shown in Table 2) were subj ected to laser filler wire tailor welding using the following process: a welding wire as described in the present disclosure (see Table 3 for the composition of the welding wire), a preset butt gap of 0.1 mm, a welding power of 3 kW, a welding speed of 40 mm/s, a defocus distance of 0 mm, a wire feeding speed of 2 m/min, a welding wire diameter of 1.0mm, a shielding gas of 81vol.%Ar +15vol.% CO₂ +4vol.%N₂, and a gas flow of 10 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 3

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.8mm, the composition of the steel plate shown in Table 1) and the hot stamped steel plate 20 to be welded having an aluminum alloy clad layer (strength grade of 1500 MPa, thickness t=1.6mm, the composition of the steel plate shown in Table 2) were subj ected to laser filler wire tailor welding using the following process: a welding wire as described in the present disclosure (see Table 3 for the composition of the welding wire), a preset butt gap of 0.5 mm, a welding power of 7 kW, a welding speed of 50 mm/s, a defocus distance of -10 mm, a wire feeding speed of 8 m/min, a welding wire diameter of 1.2mm, a shielding gas of 10vol.%Ar +80vol.% CO₂ +10vol.%N₂, and a gas flow of 25 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 4

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.2mm, the composition of the steel plate shown in Table 1) and the hot stamped steel plate 20 to be welded having an aluminum alloy clad layer (strength grade of 1500 MPa, thickness t=1.2mm, the composition of the steel plate shown in Table 2) were subj ected to laser filler wire tailor welding using the following process: a welding wire as described in the present disclosure (see Table 3 for the composition of the welding wire), a preset butt gap of 0.4 mm, a welding power of 4.5 kW, a welding speed of 60 mm/s, a defocus distance of 5 mm, a wire feeding speed of 5 m/min, a welding wire diameter of 1.2mm, a shielding gas of 19vol.%Ar +80vol.% CO₂ +1vol.%N₂, and a gas flow of 20 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 5

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1000 MPa, thickness t=1.8mm, the composition of the steel plate shown in Table 1) and the hot stamped steel plate 20 to be welded having an aluminum alloy clad layer (strength grade of 1000 MPa, thickness t=1.5mm, the composition of the steel plate shown in Table 2) were subj ected to laser filler wire tailor welding using the following process: a welding wire as described in the present disclosure (see Table 3 for the composition of the welding wire), a preset butt gap of 0.2 mm, a welding power of 5 kW, a welding speed of 70 mm/s, a defocus distance of 7 mm, a wire feeding speed of 4 m/min, a welding wire diameter of 1.2mm, a shielding gas of 49vol.%Ar +50vol.% CO₂ +1vol.%N₂, and a gas flow of 17 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 6

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1000 MPa, thickness t=2.0mm, the composition of the steel plate shown in Table 1) and the hot stamped steel plate 20 to be welded having an aluminum alloy clad layer (strength grade of 1000 MPa, thickness t=1.5mm, the composition of the steel plate shown in Table 2) were subj ected to laser filler wire tailor welding using the following process: a welding wire as described in the present disclosure (see Table 3 for the composition of the welding wire), a preset butt gap of 0.1 mm, a welding power of 5 kW, a welding speed of 120 mm/s, a defocus distance of -5 mm, a wire feeding speed of 7 m/min, a welding wire diameter of 1.0mm, a shielding gas of 40vol.%Ar +50vol.% CO₂ +10vol.%N₂, and a gas flow of 22 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 7

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 500 MPa, thickness t=1.6mm, the composition of the steel plate shown in Table 1) and the hot stamped steel plate 20 to be welded having an aluminum alloy clad layer (strength grade of 500 MPa, thickness t=1.4mm, the composition of the steel plate shown in Table 2) were subj ected to laser filler wire tailor welding using the following process: a welding wire as described in the present disclosure (see Table 3 for the composition of the welding wire), a preset butt gap of 0.3 mm, a welding power of 8 kW, a welding speed of 100 mm/s, a defocus distance of -8 mm, a wire feeding speed of 6 m/min, a welding wire diameter of 1.2mm, a shielding gas of 46vol.%Ar +50vol.% CO₂ +4vol.%N₂, and a gas flow of 19 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 8

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 500 MPa, thickness t=1.4mm, the composition of the steel plate shown in Table 1) and the hot stamped steel plate 20 to be welded having an aluminum alloy clad layer (strength grade of 500 MPa, thickness t=1.2mm, the composition of the steel plate shown in Table 2) were subj ected to laser filler wire tailor welding using the following process: a welding wire as described in the present disclosure (see Table 3 for the composition of the welding wire), a preset butt gap of 0.3 mm, a welding power of 5 kW, a welding speed of 90 mm/s, a defocus distance of -6 mm, a wire feeding speed of 5 m/min, a welding wire diameter of 1.2mm, a shielding gas of 83vol.%Ar +15vol.% CO₂ +2vol.%N₂, and a gas flow of 21 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 9

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1800 MPa, thickness t=1.5mm, the composition of the steel plate shown in Table 1) and the hot stamped steel plate 20 to be welded having an aluminum alloy clad layer (strength grade of 1500 MPa, thickness t=1.8mm, the composition of the steel plate shown in Table 2) were subj ected to laser filler wire tailor welding using the following process: a welding wire as described in the present disclosure (see Table 3 for the composition of the welding wire), a preset butt gap of 0.4 mm, a welding power of 8 kW, a welding speed of 100 mm/s, a defocus distance of 3 mm, a wire feeding speed of 3 m/min, a welding wire diameter of 1.6mm, a shielding gas of 81vol.%Ar +18vol.% CO₂ +1vol.%N₂, and a gas flow of 23 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 10

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1800 MPa, thickness t=1.2mm, the composition of the steel plate shown in Table 1) and the hot stamped steel plate 20 to be welded having an aluminum alloy clad layer (strength grade of 1500 MPa, thickness t=1.75mm, the composition of the steel plate shown in Table 2) were subj ected to laser filler wire tailor welding using the following process: a welding wire as described in the present disclosure (see Table 3 for the composition of the welding wire), a preset butt gap of 0.3 mm, a welding power of 8 kW, a welding speed of 88 mm/s, a defocus distance of -3 mm, a wire feeding speed of 5 m/min, a welding wire diameter of 1.2mm, a shielding gas of 74vol.%Ar +16vol.% CO₂ +10vol.%N₂, and a gas flow of 18 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 11

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1800 MPa, thickness t=1.2mm, the composition of the steel plate shown in Table 1) and the hot stamped steel plate 20 to be welded having an aluminum alloy clad layer (strength grade of 1000 MPa, thickness t=1.4mm, the composition of the steel plate shown in Table 2) were subj ected to laser filler wire tailor welding using the following process: a welding wire as described in the present disclosure (see Table 3 for the composition of the welding wire), a preset butt gap of 0.4 mm, a welding power of 5.5 kW, a welding speed of 80 mm/s, a defocus distance of -6 mm, a wire feeding speed of 5.5 m/min, a welding wire diameter of 1.2mm, a shielding gas of 58vol.%Ar +40vol.% CO₂ +2vol.%N₂, and a gas flow of 17 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 12

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1800 MPa, thickness t=1.2mm, the composition of the steel plate shown in Table 1) and the hot stamped steel plate 20 to be welded having an aluminum alloy clad layer (strength grade of 1000 MPa, thickness t=1.6mm, the composition of the steel plate shown in Table 2) were subj ected to laser filler wire tailor welding using the following process: a welding wire as described in the present disclosure (see Table 3 for the composition of the welding wire), a preset butt gap of 0.35 mm, a welding power of 7.5 kW, a welding speed of 110 mm/s, a defocus distance of -7.5 mm, a wire feeding speed of 7.5 m/min, a welding wire diameter of 1.4mm, a shielding gas of 5 1vol.%Ar +45vol.% CO₂ +4vol.%N₂, and a gas flow of 19 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 13

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1800 MPa, thickness t=1.5mm, the composition of the steel plate shown in Table 1) and the hot stamped steel plate 20 to be welded having an aluminum alloy clad layer (strength grade of 500 MPa, thickness t=1.7mm, the composition of the steel plate shown in Table 2) were subj ected to laser filler wire tailor welding using the following process: a welding wire as described in the present disclosure (see Table 3 for the composition of the welding wire), a preset butt gap of 0.25 mm, a welding power of 6.5 kW, a welding speed of 85 mm/s, a defocus distance of -5.5 mm, a wire feeding speed of 5.5 m/min, a welding wire diameter of 1.2mm, a shielding gas of 65vol.%Ar +30vol.% CO₂ +5vol.%N₂, and a gas flow of 12 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 14

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1800 MPa, thickness t=1.4mm, the composition of the steel plate shown in Table 1) and the hot stamped steel plate 20 to be welded having an aluminum alloy clad layer (strength grade of 500 MPa, thickness t=1.8mm, the composition of the steel plate shown in Table 2) were subj ected to laser filler wire tailor welding using the following process: a welding wire as described in the present disclosure (see Table 3 for the composition of the welding wire), a preset butt gap of 0.3 mm, a welding power of 7.5 kW, a welding speed of 105 mm/s, a defocus distance of -4.5 mm, a wire feeding speed of 8 m/min, a welding wire diameter of 1.0mm, a shielding gas of 59vol.%Ar +35vol.% CO₂ +6vol.%N₂, and a gas flow of 14 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 15

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.5mm, the composition of the steel plate shown in Table 1) and the hot stamped steel plate 20 to be welded having an aluminum alloy clad layer (strength grade of 1000 MPa, thickness t=1.5mm, the composition of the steel plate shown in Table 2) were subj ected to laser filler wire tailor welding using the following process: a welding wire as described in the present disclosure (see Table 3 for the composition of the welding wire), a preset butt gap of 0.35 mm, a welding power of 4.5 kW, a welding speed of 65 mm/s, a defocus distance of -7 mm, a wire feeding speed of 4.5 m/min, a welding wire diameter of 1.2mm, a shielding gas of 67vol.%Ar +25vol.% CO₂ +8vol.%N₂, and a gas flow of 11 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 16

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.5mm, the composition of the steel plate shown in Table 1) and the hot stamped steel plate 20 to be welded having an aluminum alloy clad layer (strength grade of 1000 MPa, thickness t=1.8mm, the composition of the steel plate shown in Table 2) were subj ected to laser filler wire tailor welding using the following process: a welding wire as described in the present disclosure (see Table 3 for the composition of the welding wire), a preset butt gap of 0.2 mm, a welding power of 5.5 kW, a welding speed of 70 mm/s, a defocus distance of -6.5 mm, a wire feeding speed of 5 m/min, a welding wire diameter of 1.2mm, a shielding gas of 73vol.%Ar +20vol.% CO₂ +7vol.%N₂, and a gas flow of 16 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 17

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.2mm, the composition of the steel plate shown in Table 1) and the hot stamped steel plate 20 to be welded having an aluminum alloy clad layer (strength grade of 500 MPa, thickness t=1.4mm, the composition of the steel plate shown in Table 2) were subjected to Metal Active Gas Arc Welding using the following process: a welding wire as described in the present disclosure (see Table 3 for the composition of the welding wire), a preset butt gap of 0.4 mm, a welding current of 110A, a welding voltage of 22V, a welding speed of 500mm/min, a welding wire diameter of 1.2mm, a shielding gas of 76vol.%Ar +20vol.% CO₂ +4vol.%N₂, and a gas flow of 13 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 18

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.2mm, the composition of the steel plate shown in Table 1) and the hot stamped steel plate 20 to be welded having an aluminum alloy clad layer (strength grade of 500 MPa, thickness t=1.7mm, the composition of the steel plate shown in Table 2) were subj ected to laser filler wire tailor welding using the following process: a welding wire as described in the present disclosure (see Table 3 for the composition of the welding wire), a preset butt gap of 0.3 mm, a welding power of 4 kW, a welding speed of 60 mm/s, a defocus distance of -6.5 mm, a wire feeding speed of 4 m/min, a welding wire diameter of 1.2mm, a shielding gas of 56vol.%Ar +35vol.% CO₂ +9vol.%N₂, and a gas flow of 20 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 19

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1000 MPa, thickness t=1.2mm, the composition of the steel plate shown in Table 1) and the hot stamped steel plate 20 to be welded having an aluminum alloy clad layer (strength grade of 500 MPa, thickness t=1.3mm, the composition of the steel plate shown in Table 2) were subjected to laser MAG hybrid welding using the following process: a welding wire as described in the present disclosure (see Table 3 for the composition of the welding wire), a welding power of 3 kW, a welding speed of 80 mm/s, a preset butt gap of 0.3 mm, a defocus distance of 2 mm, a MAG heat source current of 120A and a voltage of 20V, a wire feeding speed of 6 m/min, a welding wire diameter of 1.2mm, a shielding gas of 78vol.%Ar +20vol.% CO₂ +2vol.%N₂, and a gas flow of 24 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 20

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1000 MPa, thickness t=1.2mm, the composition of the steel plate shown in Table 1) and the hot stamped steel plate 20 to be welded having an aluminum alloy clad layer (strength grade of 500 MPa, thickness t=1.5mm, the composition of the steel plate shown in Table 2) were subj ected to laser filler wire tailor welding using the following process: a welding wire as described in the present disclosure (see Table 3 for the composition of the welding wire), a preset butt gap of 0.1 mm, a welding power of 5 kW, a welding speed of 85 mm/s, a defocus distance of -8.5 mm, a wire feeding speed of 6 m/min, a welding wire diameter of 1.0mm, a shielding gas of 40vol.%Ar +50vol.% CO₂ +10vol.%N₂, and a gas flow of 25 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Example 21

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.2mm, the composition of the steel plate shown in Table 1) and the hot stamped steel plate 20 to be welded having an aluminum alloy clad layer (strength grade of 1500 MPa, thickness t=1.5mm, the composition of the steel plate shown in Table 2) were subj ected to laser filler wire tailor welding using the following process: a welding wire as described in the present disclosure (see Table 3 for the composition of the welding wire), a preset butt gap of 0.3 mm, a welding power of 5 kW, a welding speed of 83 mm/s, a defocus distance of -6 mm, a wire feeding speed of 7 m/min, a welding wire diameter of 1.2mm, a shielding gas of 40vol.%Ar +50vol.% CO₂ +10vol.%N₂, and a gas flow of 19 L/min were used.

After the welding, metallographic examination was conducted on the cross-section of the welding line. The macromorphology of the welding line was excellent, and there was no obvious spatter.

After the welding, the same hot stamping process as that used in Example 1 was used for hot stamping. The quasi-static tensile performances of welded joints of the hot-stamped part are shown in Table 4. The high-speed tensile performances of welded joints of the hot-stamped part are shown in Table 5.

### Comparative Example 1

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.5mm, the composition of the steel plate shown in Table 1) and the hot stamped steel plate 20 to be welded having an aluminum alloy clad layer (strength grade of 1500 MPa, thickness t=1.5mm, the composition of the steel plate shown in Table 2) were subjected to ablation welding. After the welding, the same hot stamping process as that used in Example 1 was used for hot stamping. The welding line structure of the hot-stamped part obtained by ablation welding is full martensitic. The results of the high-speed tensile test of the prepared tailor-welded hot stamped part are shown in Table 5. The test was carried out according to the standard ISO/DIS 26203-2.

### Comparative Example 2

A hot formed steel plate to be welded was subjected to surface cleaning to remove contaminants such as oil and water stains from the surface to guarantee cleanliness of the surface.

The hot stamped steel plate 10 to be welded having an aluminum alloy clad layer (strength grade of 1500 MPa, thickness t=1.5mm, the composition of the steel plate shown in Table 1) and the hot stamped steel plate 20 to be welded having an aluminum alloy clad layer (strength grade of 1500 MPa, thickness t=1.5mm, the composition of the steel plate shown in Table 2) were subjected to filler wire welding (see Table 3 for the composition of the welding wire). The welding line structure of the hot-stamped part obtained is martensite + massive ferrite. The results of the high-speed tensile test of the welded joint are shown in Table 5. The test was carried out according to the standard ISO/DIS 26203-2.

As can be seen from Table 4 and Table 5, the quasi-static tensile fracture position of the welded joint of the hot-stamped part obtained according to the present disclosure is located in the base metal, indicating that the welding line strength is greater than the strength of low-strength base metal, which meets the requirements in the field of automobile production. The high-speed tensile performance of the welded joint is significantly improved, and the fracture strain value of the welded joint is greater than 0.09 when the strain rate is 40~800/s.

Comparative Example 1 uses the traditional ablation welding. The welding line structure of the welded joint is a single martensite, and the fracture strain value of the welded joint is about 0.07 when the strain rate is 40/s, and the fracture strain value of the welded joint is about 0.058 when the strain rate is 800/s.

Although Comparative Example 2 uses filler wire welding, the welding wire composition does not meet the requirements of the present disclosure, so that the maximum value of fracture strain value of the welded joint is 0.029. That is, the hot-stamped part prepared from tailor welded part obtained by the technical solution of the present disclosure has better high-speed deformation ability under the premise of ensuring quasi-static mechanical properties, and can absorb more energy during collision and thus has higher collision safety.

**Table 1 (unit: weight percentage)**

| | Chemical composition of steel substrate | | | | | | | | | | | | | | clad layer composition | |
|---|---|---|---|---|---|---|---|---|---|---|---|---|---|---|---|---|
| | C | Si | Mn | P | S | Al | Cr | Nb | V | Ti | Mo | Ni | B | N | Si | Fe |
| Ex. 1 | 0.36 | 0.11 | 1.1 | 0.0145 | 0.0056 | 0.03 | 0.07 | 0.06 | 0.06 | 0.08 | 0.35 | 0.19 | 0.0045 | 0.001 | 9.5 | 2.3 |
| Ex. 2 | 0.33 | 0.35 | 1.8 | 0.0059 | 0.0076 | 0.02 | 0.90 | 0.05 | 0.05 | 0.10 | 0.14 | 0.17 | 0.0015 | 0.004 | 9.3 | 2.4 |
| Ex. 3 | 0.24 | 0.25 | 2.5 | 0.0065 | 0.0035 | 0.03 | 0.60 | / | / | 0.07 | / | 0.24 | 0.0350 | / | 9.8 | 2.3 |
| Ex. 4 | 0.26 | 0.10 | 0.5 | 0.0150 | 0.0025 | 0.01 | 0.40 | / | / | 0.01 | / | 0.13 | 0.0005 | / | 9.9 | 2.2 |
| Ex. 5 | 0.09 | 0.30 | 1.3 | 0.0125 | 0.0120 | 0.30 | 0.50 | 0.10 | 0.15 | 0.10 | 0.08 | 0.35 | 0.0090 | / | 9.3 | 2.3 |
| Ex. 6 | 0.12 | 1 | 2 | 0.0105 | 0.0090 | 0.23 | 0.06 | 0.04 | 0.04 | 0.05 | 0.35 | 0.20 | 0.0025 | / | 9.2 | 2.1 |
| Ex. 7 | 0.075 | 0.06 | 0.6 | 0.0195 | 0.0085 | 0.055 | 0.055 | / | / | 0.05 | / | / | / | / | 9.5 | 1.9 |
| Ex. 8 | 0.09 | 0.01 | 0.9 | 0.0112 | 0.0065 | 0.095 | 0.097 | / | / | 0.03 | / | / | / | / | 9.3 | 2.1 |
| Ex. 9 | 0.30 | 0.05 | 1.3 | 0.0150 | 0.0035 | 0.07 | 1.00 | 0.01 | 0.09 | 0.03 | 0.40 | 0.24 | 0.0039 | 0.001 | 9.1 | 2.3 |
| Ex. 10 | 0.35 | 0.60 | 2.2 | 0.0121 | 0.0100 | 0.06 | 0.63 | 0.08 | 0.08 | 0.09 | 0.50 | 0.21 | 0.0031 | 0.006 | 8.8 | 2.4 |
| Ex. 11 | 0.32 | 0.18 | 1.7 | 0.0054 | 0.0089 | 0.02 | 0.81 | 0.02 | 0.07 | 0.05 | 0.45 | 0.15 | 0.0050 | 0.002 | 9.3 | 2.2 |
| Ex. 12 | 0.39 | 0.25 | 0.5 | 0.0095 | 0.0025 | 0.01 | 0.45 | 0.07 | 0.10 | 0.01 | 0.25 | 0.11 | 0.0001 | 0.004 | 9.4 | 2.3 |
| Ex. 13 | 0.34 | 0.45 | 0.9 | 0.0086 | 0.0043 | 0.05 | 0.31 | 0.03 | 0.04 | 0.12 | 0.01 | 0.08 | 0.0007 | 0.003 | 9.6 | 2.2 |
| Ex. 14 | 0.37 | 0.53 | 2.5 | 0.0065 | 0.0065 | 0.04 | 0.15 | 0.04 | 0.02 | 0.07 | 0.07 | 0.02 | 0.0023 | 0.005 | 9.3 | 2.4 |
| Ex. 15 | 0.20 | 0.50 | 2.1 | 0.0045 | 0.0075 | 0.08 | 0.01 | / | / | 0.15 | / | 0.19 | 0.0050 | / | 9.4 | 2.1 |
| Ex. 16 | 0.28 | 0.46 | 0.9 | 0.0074 | 0.0050 | 0.07 | 0.71 | / | / | 0.05 | / | 0.22 | 0.0550 | / | 9.6 | 2.3 |
| Ex. 17 | 0.30 | 0.25 | 1.3 | 0.0100 | 0.0100 | 0.09 | 1 | / | / | 0.19 | / | 0.02 | 0.0130 | / | 9.2 | 2.2 |
| Ex. 18 | 0.22 | 0.15 | 1.7 | 0.0085 | 0.0025 | 0.05 | 0.15 | / | / | 0.11 | / | 0.08 | 0.0018 | / | 9.5 | 2.4 |
| Ex. 19 | 0.15 | 0.35 | 2.5 | 0.0081 | 0.0058 | 0.15 | 0.15 | 0.08 | 0.12 | 0.08 | 0.50 | 0.50 | 0.0071 | / | 9.1 | 2.2 |
| Ex. 20 | 0.06 | 1.00 | 0.5 | 0.0015 | 0.0018 | 0.02 | 0.30 | 0.15 | 0.08 | 0.02 | 0.25 | 0.08 | 0.0045 | / | 9.3 | 2.1 |
| Ex. 21 | 0.23 | 0.24 | 1.18 | 0.0110 | 0.0020 | 0.05 | 0.17 | / | / | 0.03 | / | / | 0.0030 | / | 9.4 | 2.0 |
| Comp. Ex. 1 | 0.23 | 0.24 | 1.18 | 0.0110 | 0.0020 | 0.05 | 0.17 | / | / | 0.03 | / | / | 0.0030 | / | 9.3 | 2.1 |
| Comp. Ex. 2 | 0.23 | 0.24 | 1.18 | 0.0110 | 0.0020 | 0.05 | 0.17 | / | / | 0.03 | / | / | 0.0030 | / | 9.4 | 2.3 |

**Table 2 (unit: weight percentage)**

| | Chemical composition of steel substrate | | | | | | | | | | | | | | clad layer composition | |
|---|---|---|---|---|---|---|---|---|---|---|---|---|---|---|---|---|
| | C | Si | Mn | P | S | Al | Cr | Nb | V | Ti | Mo | Ni | B | N | Si | Fe |
| Ex. 1 | 0.30 | 0.15 | 0.5 | 0.0075 | 0.0025 | 0.04 | 0.5 | 0.08 | 0.03 | 0.11 | 0.25 | 0 | 0.0025 | 0.003 | 9.5 | 2.2 |
| Ex. 2 | 0.39 | 0.35 | 2.5 | 0.0095 | 0.0057 | 0.07 | 0.9 | 0.03 | 0.07 | 0.06 | 0.45 | 0.24 | 0.0045 | 0.006 | 9.3 | 2.3 |
| Ex. 3 | 0.20 | 0.48 | 0.5 | 0.0081 | 0.0020 | 0.05 | 0.2 | / | / | 0.19 | / | 0.01 | 0.0790 | / | 9.4 | 2.4 |
| Ex. 4 | 0.30 | 0.34 | 2.5 | 0.0073 | 0.0045 | 0.07 | 0.9 | / | / | 0.05 | / | 0.18 | 0.0530 | / | 9.6 | 2.2 |
| Ex. 5 | 0.06 | 0.45 | 0.5 | 0.0035 | 0.004 | 0.02 | 0.05 | 0.19 | 0.1 | 0.10 | 0.15 | 0.01 | 0.0075 | / | 9.2 | 2.3 |
| Ex. 6 | 0.15 | 0.75 | 2.0 | 0.0094 | 0.0052 | 0.30 | 0.15 | 0.11 | 0.01 | 0.01 | 0.07 | 0.50 | 0.0052 | / | 9.5 | 2.4 |
| Ex. 7 | 0.08 | 0.03 | 0.5 | 0.0085 | 0.0018 | 0.021 | 0.099 | / | / | 0.01 | / | / | / | / | 9.4 | 2.3 |
| Ex. 8 | 0.10 | 0.09 | 1 | 0.0065 | 0.0025 | 0.056 | 0.021 | / | / | 0.005 | / | / | / | / | 9.6 | 2.2 |
| Ex. 9 | 0.23 | 0.28 | 1.2 | 0.0055 | 0.0025 | 0.09 | 0.50 | / | / | 0.1 | / | 0.24 | 0.025 | / | 9.2 | 2.3 |
| Ex. 10 | 0.27 | 0.2 | 1.8 | 0.0085 | 0.0042 | 0.05 | 0.75 | / | / | 0.15 | / | 0.05 | 0.0064 | / | 9.3 | 2.2 |
| Ex. 11 | 0.15 | 0.65 | 1.8 | 0.0075 | 0.0038 | 0.20 | 0.32 | 0.08 | 0.08 | 0.09 | 0.5 | 0.09 | 0.0031 | / | 9.2 | 2.3 |
| Ex. 12 | 0.06 | 0.55 | 2.5 | 0.0064 | 0.0043 | 0.25 | 0.26 | 0.13 | 0.12 | 0.03 | 0.3 | 0.35 | 0.0055 | / | 9.5 | 2.2 |
| Ex. 13 | 0.08 | 0.02 | 1 | 0.0150 | 0.004 | 0.046 | 0.038 | / | / | 0.04 | / | / | / | / | 9.4 | 2.1 |
| Ex. 14 | 0.09 | 0.04 | 0.9 | 0.0059 | 0.0038 | 0.095 | 0.05 | / | / | 0.03 | / | / | / | / | 9.3 | 2.2 |
| Ex. 15 | 0.10 | 0.95 | 1.5 | 0.0094 | 0.0033 | 0.14 | 0.45 | 0.02 | 0.15 | 0.07 | 0.4 | 0.15 | 0.0012 | / | 9.5 | 2.0 |
| Ex. 16 | 0.08 | 0.30 | 1.8 | 0.0071 | 0.0036 | 0.08 | 0.50 | 0.16 | 0.05 | 0.05 | 0.2 | 0.26 | 0.0095 | / | 9.4 | 2.1 |
| Ex. 17 | 0.06 | 0.07 | 0.7 | 0.0042 | 0.0035 | 0.03 | 0.01 | / | / | 0.045 | / | / | / | / | 9.6 | 2.2 |
| Ex. 18 | 0.10 | 0.05 | 1 | 0.0095 | 0.0055 | 0.085 | 0.085 | / | / | 0.02 | / | / | / | / | 9.3 | 2.3 |
| Ex. 19 | 0.06 | 0.01 | 0.8 | 0.0064 | 0.0025 | 0.071 | 0.065 | / | / | 0.001 | / | / | / | / | 9.2 | 2.1 |
| Ex. 20 | 0.10 | 0.08 | 0.6 | 0.0054 | 0.0015 | 0.01 | 0.04 | / | / | 0.05 | / | / | / | / | 9.5 | 2.3 |
| Ex. 21 | 0.23 | 0.24 | 1.18 | 0.0110 | 0.002 | 0.05 | 0.17 | / | / | 0.03 | / | / | 0.003 | / | 9.7 | 2.4 |
| Comp. Ex. 1 | 0.23 | 0.24 | 1.18 | 0.0110 | 0.002 | 0.05 | 0.17 | / | / 0.03 | | / | / | 0.003 / | | 9.5 | 2.2 |
| Comp. Ex. 2 | 0.23 | 0.24 | 1.18 | 0.0110 | 0.002 | 0.05 | 0.17 | / | / | 0.03 | / | / | 0.003 / | | 9.4 | 2.1 |

**Table 3 (unit: weight percentage)**

| | C | Mn | Ni |
|---|---|---|---|
| Ex. 1 | 0.15 | 1.2 | 4 |
| Ex. 2 | 0.13 | 1.1 | 2.5 |
| Ex. 3 | 0.15 | 1.9 | 4 |
| Ex. 4 | 0.09 | 1.1 | 3.2 |
| Ex. 5 | 0.14 | 1.9 | 3.1 |
| Ex. 6 | 0.1 | 1.2 | 0.5 |
| Ex. 7 | 0.09 | 1.9 | 4 |
| Ex. 8 | 0.08 | 1.2 | 1.5 |
| Ex. 9 | 0.15 | 1.8 | 2 |
| Ex. 10 | 0.14 | 1.6 | 2.4 |
| Ex. 11 | 0.05 | 1.9 | 4 |
| Ex. 12 | 0.15 | 0.5 | 1.2 |
| Ex. 13 | 0.15 | 0.5 | 2.6 |
| Ex. 14 | 0.08 | 1.3 | 1.3 |
| Ex. 15 | 0.12 | 1.9 | 1.8 |
| Ex. 16 | 0.13 | 1.2 | 2.5 |
| Ex. 17 | 0.12 | 1.6 | 3.2 |
| Ex. 18 | 0.13 | 1.7 | 1 |
| Ex. 19 | 0.15 | 0.7 | 0 |
| Ex. 20 | 0.05 | 1.7 | 0.7 |
| Ex. 21 | 0.13 | 1.38 | 3.0 |
| Comp. Ex. 1 | - | - | - |
| Comp. Ex. 2 | 0.09 | 2.7 | 1.5 |

**Table 4 ***

| Example | Joint tensile strength (MPa) | Joint elongation (%) | Fracture position of the Sample |
|---|---|---|---|
| 1 | 1835 | 5.7 | base metal |
| 2 | 1873 | 5.1 | base metal |
| 3 | 1595 | 5.6 | base metal |
| 4 | 1550 | 5.8 | base metal |
| 5 | 1037 | 6.6 | base metal |
| 6 | 1060 | 6.7 | base metal |
| 7 | 535 | 11.4 | base metal |
| 8 | 568 | 11.6 | base metal |
| 9 | 1535 | 5.6 | base metal |
| 10 | 1610 | 5.8 | base metal |
| 11 | 1025 | 6.9 | base metal |
| 12 | 1055 | 7.3 | base metal |
| 13 | 530 | 11.8 | base metal |
| 14 | 560 | 11.3 | base metal |
| 15 | 1045 | 7.5 | base metal |
| 16 | 1038 | 7.3 | base metal |
| 17 | 565 | 11.8 | base metal |
| 18 | 550 | 11.9 | base metal |
| 19 | 545 | 12.1 | base metal |
| 20 | 550 | 13.1 | base metal |
| 21 | 1485 | 5.6 | base metal |

| | | | |
|---|---|---|---|
| * The quasi-static tensile test of the joint was performed according to the standard ISO 4136. | | | |

**Table 5***

| | Strain rate (/s) | Tensile strength of welding line (MPa) | Fracture strain value |
|---|---|---|---|
| Ex. 1 | 200 | 1975 | 0.0943 |
| Ex. 2 | 400 | 2068 | 0.0908 |
| Ex. 3 | 40 | 1613 | 0.1125 |
| Ex. 4 | 800 | 1878 | 0.0973 |
| Ex. 5 | 600 | 1375 | 0.1081 |
| Ex. 6 | 300 | 1220 | 0.1215 |
| Ex. 7 | 100 | 630 | 0.1835 |
| Ex. 8 | 700 | 815 | 0.1421 |
| Ex. 9 | 100 | 1603 | 0.1104 |
| Ex. 10 | 400 | 1768 | 0.0993 |
| Ex. 11 | 350 | 1250 | 0.1172 |
| Ex. 12 | 250 | 1230 | 0.1249 |
| Ex. 13 | 40 | 645 | 0.1570 |
| Ex. 14 | 800 | 835 | 0.1317 |
| Ex. 15 | 150 | 1146 | 0.1310 |
| Ex. 16 | 700 | 1440 | 0.1063 |
| Ex. 17 | 100 | 740 | 0.1525 |
| Ex. 18 | 600 | 851 | 0.1335 |
| Ex. 19 | 400 | 815 | 0.1375 |
| Ex. 20 | 200 | 775 | 0.1471 |
| Ex. 21 | 40 | / | 0.113 |
| | 150 | / | 0.105 |
| | 500 | / | 0.098 |
| | 800 | / | 0.096 |
| Comp. Ex. 1 | 40 | / | 0.071 |
| | 150 | / | 0.065 |
| | 500 | / | 0.059 |
| | 800 | / | 0.058 |
| Comp. Ex. 2 | 40 | / | 0.029 |
| | 150 | / | 0.025 |
| | 500 | / | 0.022 |
| | 800 | / | 0.017 |

| | | | |
|---|---|---|---|
| * The high-speed tensile test was performed according to the standard ISO/DIS 26203-2. | | | |

The tailor-welded part obtained in Examples 1-21 has a welding line structure of martensite + 1~15vol.% diffusely distributed needle-like ferrite + 0~5vol.% residual austenite, and a concentration of free aluminum in the welding line of 0.1~4.0wt.%. The tailor welded part is subjected to a hot-stamping forming process to obtain a hot-stamped part, so that an appropriate amount of diffusely distributed ferrite is retained in the welding line of the hot-stamped part, and the welding line structure of the hot-stamped part obtained is martensite +0.1-10vol.% diffusely distributed needle-like ferrite without iron-aluminum intermetallic compound or massive ferrite.

## Claims

1. A method for manufacturing a steel thin-walled tailor-welded part, comprising the following steps:
1) preparation before steel plate welding
taking two steel plates of the same or different strength levels to be welded and cleaning the surface of the steel plates to be welded before welding, wherein the steel plate to be welded comprises a substrate and an aluminum or aluminum alloy clad layer on at least one surface thereof, wherein the clad layer comprises an intermetallic compound alloy layer in contact with the substrate and a metal alloy layer thereon, wherein the clad layer on the steel plate to be welded is not removed or thinned;
2) presetting a butt gap in welding
presetting a butt gap between steel plates to be welded at 0.1-0.5 mm;
3) welding process
conducting welding by a laser filler wire welding, a MAG welding or a laser MAG hybrid welding;
wherein, in the laser filler wire welding, a welding speed is 40-120 mm/s, a wire feeding speed is 2-8 m/min; in the MAG welding, a welding speed is 300-800 mm/min; in the laser MAG hybrid welding, a welding speed is 60-150 mm/s, a wire feeding speed is 4-10 m/min;
the shielding gas is Ar+15~80vol.%CO₂+1~10vol.%N₂, the shielding gas has a flow rate of from 10 to 25 L/min;
the difference obtained by subtracting the content of C, Mn, Ni in steel plate A to be welded from the content of corresponding elements in the composition of the welding wire for the welding is expressed by ΔC, ΔMn, ΔNi, respectively;
wherein,
the steel plate A to be welded has a tensile strength of <900MPa, ΔC: -0.05-0.09wt.%, ΔMn: -0.5wt.%~1.4wt.%, ΔNi: 0~4.0wt.%; or
900MPa≤ the tensile strength of the steel plate A to be welded <1300MPa, ΔC: - 0.1-0.09wt.%, ΔMn: -2~1.4wt.%, ΔNi: 0~4.0wt%; or
1300MPa≤ the tensile strength of the steel plate A to be welded <1700MPa, ΔC: -0.21-0.05wt.%, ΔMn: -1.4~1.4wt.%, ΔNi: 1.76~4.0wt%; or
the tensile strength of the steel plate A to be welded is ≥1700MPa, ΔC: -0.26~-0.15wt.%, ΔMn: -1.4~0.7wt%, ΔNi: 2.26~4.0wt%;
wherein the steel plate A to be welded is one of two steel plates to be welded of the same strength level, or the steel plate to be welded with lower strength level in two steel plates to be welded of different strength levels;
wherein the tailored weld part has a welding line structure of martensite + 1~15vol.% diffusely distributed ferrite + 0~5vol.% residual austenite; and a free aluminum content in the welding line of 0.1~4.0wt.%.

2. The method for manufacturing a steel thin-walled tailor-welded part according to claim 1, wherein in step 3), the shielding gas has a CO₂ content of 15~50 vol.%.

3. The method for manufacturing a steel thin-walled tailor-welded part according to claim 1 or 2, wherein in step 3), the shielding gas has a N₂ content of 2~4 vol.%.

4. The method for manufacturing a steel thin-walled tailor-welded part according to claim 1, wherein the MAG welding or laser MAG hybrid welding uses a welding current of 110~130A, a welding voltage of 18~25V.

5. The method for manufacturing a steel thin-walled tailor-welded part according to claim 1, wherein in the laser filler wire welding or laser MAG hybrid welding, a defocus distance is from -10 to 10 mm, a laser power is controlled at from 3 to 8 kW; preferably, in the laser filler wire welding or laser MAG hybrid welding, the minimum spot output by the laser processing head has a diameter of 0.3~1.6mm.

6. The method for manufacturing a steel thin-walled tailor-welded part according to claim 1, wherein the clad layer is an aluminum alloy clad layer, wherein the aluminum alloy clad layer has a composition based on weight percentage of Si: 5~11%, Fe: 0~4%, with a balance of Al and other unavoidable impurities.

7. The method for manufacturing a steel thin-walled tailor-welded part according to claim 1, wherein the steel plate A to be welded has a tensile strength of <900MPa, and a composition based on weight percentage of C: 0.06-0.1%, 0<Si≤0.1%, Mn: 0.5-1.0%, P<0.03%, S<0.01%, Al<0.1%, 0<Cr<0.1%, 0<Ti≤0.05%, with a balance of Fe and other unavoidable impurities; or
the steel plate A to be welded has a tensile strength of more than or equal to 900 MPa and less than 1300 MPa, and a composition based on weight percentage of C: 0.06-0.15%, Si: 0.3~1.0%, Mn: 0.5-2.5%, P≤0.10%, S≤0.05%, Al: 0.02-0.30%, Cr: 0.05-0.5%, Nb: 0.02-0.20%, V≤0.15%, Ti: 0.01-0.10%, Mo≤0.5%, Ni≤0.5%, B: 0.001-0.01%, with a balance of Fe and other unavoidable impurities; or
the steel plate A to be welded has a tensile strength of more than or equal to 1300 MPa and less than 1700 MPa, and a composition based on weight percentage of C: 0.2-0.3%, Si: 0.1-0.5%, Mn: 0.5-2.5%, P<0.015%, S<0.05%, Al<0.1%, Ti<0.2%, B: 0.0005~0.08%, Cr: 0.01-1%, Ni≤0.24%, with a balance of Fe and other unavoidable impurities; or
the steel plate A to be welded has a tensile strength of ≥1700MPa, and a composition based on weight percentage of C: 0.30-0.39%, Si: 0.05-0.6%, Mn: 0.5~2.5%, P≤0.015%, S≤0.01%, Al: 0.01-0.07%, Cr≤1.0%, Nb≤0.08%, V≤0.1%, Ti: 0.01-0.12%, Mo: 0.01-0.5%, Ni< 0.25%, B: 0.0001~0.005%, N≤0.006%, with a balance of Fe and other unavoidable impurities.

8. The method for manufacturing a steel thin-walled tailor-welded part according to claim 1, wherein the welding wire has a composition based on weight percentage of C: 0.05~0.15%, Mn: 0.5-1.9%, Ni: 0~4%, preferably 0.5-4%, with a balance of Fe and other unavoidable impurities.

9. A steel thin-walled tailor-welded part formed by welding two steel plates to be welded of the same or different strength levels, wherein the steel plate to be welded comprises a substrate and an aluminum or aluminum alloy clad layer on at least one surface thereof, wherein the clad layer comprises an intermetallic compound alloy layer in contact with the substrate and a metal alloy layer thereon, wherein the steel thin-walled tailor-welded part has a welding line structure of martensite + 1~15vol.% diffusely distributed ferrite + 0~5vol.% residual austenite; and a free aluminum content in the welding line of 0.1~4.0wt.%, preferably, the steel thin-walled tailor-welded part is prepared by the method according to any one of claims 1-8.

10. A hot-stamped part, wherein the hot-stamped part has a welding line structure of martensite + 0.1~10vol.% diffusely distributed ferrite, a quasi-static tensile fracture position of a welded joint located in the base metal, a joint elongation of no less than 4%, and a welded joint tensile fracture strain value of greater than 0.08 when the strain rate of welded joint is 40-800/s.

11. The hot-stamped part according to claim 10, wherein the hot stamped part is prepared by using the steel thin-walled tailor-welded part obtained by the manufacturing method according to any one of claims 1-8, or using the steel thin-walled tailor-welded part according to claim 9.

12. The hot-stamped part according to claim 10, wherein the welding line structure of the hot stamped part has a ferrite content of 0.5~5vol.%; and/or
the welding line structure of the hot stamped part comprises needle-like ferrite.

13. The hot-stamped part according to claim 10, wherein when the welded joint strain rate of the hot stamped part is 40~800/s, the tensile fracture strain value of welded joint is greater than 0.09.

14. A method for manufacturing a hot stamped part, which comprises a step of manufacturing a steel thin-walled tailor-welded part by adopting the method for manufacturing a steel thin-walled tailor-welded part according to any one of claims 1-8, and a step of subjecting the manufactured steel thin-walled tailor-welded part to hot stamping and quenching.

15. The method according to claim 14, wherein in the hot stamping and quenching, a heating temperature is 920-950 °C, a heating time is 3-6 minutes, and the pressure of the part is maintained in a water-passing mold for 8-20 seconds.
